# EUROPEAN PATENT APPLICATION

(11) **EP 4 661 475 A1**
(43) Date of publication of application: **10.12.2025**
(21) Application number: 24766332.1
(22) Date of filing: 29.02.2024
(51) Int. Cl.: H04W 24/08

(54) **COMMUNICATION METHOD AND COMMUNICATION APPARATUS**

(30) Priority: 07.03.2023 CN 202310245414
(71) Applicant: Huawei Technologies Co., Ltd., Shenzhen, Guangdong 518129 (CN)
(72) Inventor: XUAN, Yidi, Shenzhen, Guangdong 518129 (CN); GUAN, Lei, Shenzhen, Guangdong 518129 (CN); LI, Ruijie, Shenzhen, Guangdong 518129 (CN)
(74) Representative: Maiwald GmbH
(86) International application number: PCT/CN2024/079332
(87) International publication number: WO 2024/183610

(57) **Abstract**

This application provides a communication method and apparatus. After a quantity of antenna links of a network device changes, a configuration of a reference signal sent by the network device may also change. In this application, the network device may indicate, to a terminal device by using indication information, a new configuration of the reference signal after the quantity of antenna links changes, so that the terminal device can evaluate downlink radio link quality based on the new configuration. For example, the terminal device determines a first deviation value based on the configuration, and corrects a predefined evaluation parameter or a receive power of a first reference signal based on the first deviation value. In this way, an accurate downlink radio link quality evaluation result is obtained.

## Description

This application claims priority to Chinese Patent Application No. 202310245414.X, filed with the China National Intellectual Property Administration on March 7, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With gradual evolution of communication systems, "low-carbon" communication, especially how to reduce energy consumption of a network device, has attracted increasing attention. In a possible implementation, the network device may reduce, through dynamic antenna shutdown, a quantity of antenna links for sending and receiving, to achieve energy saving. After the dynamic antenna shutdown of the network device, a configuration of a reference signal used for radio link monitoring (radio link monitoring, RLM) measurement also changes, and the change causes a change in a transmit power corresponding to the reference signal. Currently, a reference signal used for RLM evaluation is semi-statically configured, and a configuration periodicity is long. Therefore, a terminal device cannot learn of these changes in real time. After the dynamic antenna shutdown, the terminal device may still perform RLM evaluation in an evaluation manner used before the dynamic antenna shutdown. As a result, a downlink radio link quality evaluation result is inaccurate.

### SUMMARY

This application provides a communication method and a communication apparatus, to obtain an accurate downlink radio link quality evaluation result.

According to a first aspect, a communication method is provided. The method may be performed by a terminal device, or may be performed by a chip or a circuit configured in the terminal device. This is not limited in this application.

The method may include: receiving first indication information, where the first indication information indicates a configuration of a first reference signal in a third time unit; receiving the first reference signal in the third time unit; determining a first deviation value based on the first indication information, where the first deviation value is a difference between a first transmit power and a transmit power of the first reference signal in the third time unit, and the first transmit power is a preconfigured transmit power difference of the first reference signal, or the first transmit power is an assumed transmit power of the first reference signal; and evaluating radio link quality based on the first reference signal in the third time unit and the first deviation value.

In the foregoing technical solution, the first indication information indicates the configuration of the first reference signal, so that the terminal device can determine the first deviation value based on the configuration, and evaluate the radio link quality based on the first deviation value, to avoid impact of burst power increase or decrease of the first reference signal on radio link quality evaluation. In this way, an accurate downlink radio link quality evaluation result is obtained.

In some implementations of the first aspect, evaluating the radio link quality based on the first reference signal in the third time unit and the first deviation value includes: adjusting a receive power of the first reference signal in the third time unit based on the first deviation value; and evaluating the radio link quality based on an adjusted receive power of the first reference signal in the third time unit and a predefined evaluation parameter, where the predefined evaluation parameter includes a ratio of assumed resource element RE energy of a physical downlink control channel PDCCH to RE energy of a channel state information-reference signal CSI-RS, or the predefined evaluation parameter includes a ratio of assumed RE energy of a demodulation reference signal DMRS of the PDCCH to the RE energy of the CSI-RS; or adjusting a predefined evaluation parameter based on the first deviation value; based on a receive power of the first reference signal in the third time unit and an adjusted predefined evaluation parameter.

The foregoing technical solution provides two specific manners of evaluating the radio link quality based on the first deviation value. For example, evaluation may be performed after the receive power of the first reference signal is corrected based on the first deviation value, or evaluation may be performed after the predefined evaluation parameter is modified based on the first deviation value.

In some implementations of the first aspect, that the first indication information indicates the configuration of the first reference signal in the third time unit includes: The first indication information includes a first configuration, and the first configuration is the configuration of the first reference signal in the third time unit; and determining the first deviation value based on the first indication information includes: determining a configuration deviation, where the configuration deviation is a deviation between the first configuration and a configuration of a first reference signal in a first time unit, the first reference signal in the first time unit is a first reference signal that is last received before the third time unit and that is different from the first configuration, the configuration deviation corresponds to a second deviation value, and the second deviation value is a difference between a transmit power of the first reference signal received in the first time unit and the transmit power of the first reference signal received in the third time; and determining the first deviation value based on the second deviation value and a third deviation value, where the third deviation value is a difference between the transmit power of the first reference signal received in the first time unit and the first transmit power; or determining the first deviation value based on a deviation value corresponding to the first configuration.

In the foregoing technical solution, the first indication information does not directly include the first deviation value, but may indirectly indicate the first deviation value by using the first configuration.

In some implementations of the first aspect, that the first indication information indicates the configuration of the first reference signal in the third time unit includes: The first indication information includes the first deviation value.

In the foregoing technical solution, the first indication information includes the first deviation value, in other words, the first indication information may directly indicate the first deviation value.

In some implementations of the first aspect, the method further includes: receiving the first reference signal in the first time unit, where the first time unit and the third time unit are adjacent time units for receiving first reference signals, the first time unit is before the third time unit, and the power of the first reference signal received in the first time unit is different from the configuration of the first reference signal received in the third time unit.

In some implementations of the first aspect, receiving the first indication information includes: receiving the first indication information in a second time unit, where the second time unit is between the first time unit and the third time unit.

In the foregoing technical solution, a network device does not need to send, to the terminal device, configuration information of each reference signal used for RLM evaluation, and only needs to send, to the terminal device, configuration information of a reference signal that is different from configuration information of a previous first reference signal, to reduce signaling overheads.

In some implementations of the first aspect, the first indication information is carried in a PDCCH, or the first indication information is carried in a medium access control MAC control element CE.

According to a second aspect, a communication method is provided. The method may be performed by a terminal device, or may be performed by a chip or a circuit configured in the terminal device. This is not limited in this application.

The method may include: receiving first indication information, where the first indication information is used to adjust a receive power of a first reference signal in a third time unit; receiving the first reference signal in the third time unit; determining, based on the first indication information, that an adjusted receive power of the first reference signal in the third time unit is a first power; and evaluating downlink radio link quality based on the first power.

In the foregoing technical solution, the terminal device may adjust, by using the first indication information, the receive power of the first reference signal used for RLM evaluation, so that the terminal device can evaluate the radio link quality based on the adjusted receive power. In this way, an accurate downlink radio link quality evaluation result is obtained.

In some implementations of the second aspect, the first power is a sum of the receive power of the first reference signal in the third time unit and a first deviation value. The first deviation value is a deviation value between a first transmit power and a transmit power of the first reference signal in the third time unit, and the first transmit power is a preconfigured transmit power of the first reference signal, or the first transmit power is an assumed transmit power of the first reference signal.

In this evaluation manner, a value of a used predefined evaluation parameter is not adjusted. Therefore, the terminal device needs to adjust the receive power of the first reference signal in the third time unit based on the first deviation value, so that in this implementation, an adjusted power of the receive power of the first reference signal in the third time unit is equal to the first power. In this way, an accurate evaluation result can be obtained.

In some implementations of the second aspect, that the first indication information is used to adjust the receive power of the first reference signal in the third time unit includes: The first indication information indicates a first scale factor, where the first power is obtained by multiplying the receive power of the first reference signal in the third time unit by the first scale factor; or the first indication information indicates a second scale factor, where the first power is obtained by dividing the receive power of the first reference signal in the third time unit by the second scale factor; or the first indication information indicates the first deviation value.

In some implementations of the second aspect, the method further includes: receiving a first reference signal in a first time unit, where the first time unit and the third time unit are adjacent time units for receiving first reference signals, the first time unit is before the third time unit, and a power of the first reference signal received in the first time unit is different from the power of the first reference signal received in the third time unit.

In the foregoing technical solution, the terminal device does not need to receive configuration information of each reference signal used for RLM evaluation, and the terminal device only needs to receive configuration information of a reference signal that is different from configuration information of a previous first reference signal, to reduce signaling overheads.

In some implementations of the second aspect, the first indication information is received in a second time unit, where the second time unit is between the first time unit and the third time unit.

In some implementations of the second aspect, the first indication information is carried in a physical downlink control channel PDCCH, or the first information is carried in a medium access control MAC control element CE.

According to a third aspect, a communication method is provided. The method may be performed by a terminal device, or may be performed by a chip or a circuit configured in the terminal device. This is not limited in this application.

The method may include: receiving M first reference signals from a network device in M time units, where the M first reference signals are in one-to-one correspondence with the M time units, the first reference signals are used for radio link monitoring RLM, and M is an integer greater than 1; and evaluating downlink radio link quality based on N first reference signals in the M first reference signals, where N is less than M, configurations of at least two first reference signals in the M first reference signals are different, and configurations of the N first reference signals are the same.

In the foregoing technical solution, the terminal device selects a plurality of first reference signals with a same configuration from the M first reference signals used for RLM evaluation, to be specific, selects a plurality of first reference signals with a same transmit power (corresponding to a same received power) from the first reference signals sent by the network device, to evaluate the radio link quality. In this way, an accurate downlink radio link quality evaluation result can be obtained.

In some implementations of the third aspect, the configurations of the N first reference signals each are a first configuration, and the first configuration is a configuration of a first reference signal received in a last time unit in the M time units.

In some implementations of the third aspect, the configurations of the N first reference signals each are a first configuration, and the first configuration is a configuration of a reference signal with a lowest or highest power in the M first reference signals.

In some implementations of the third aspect, the M time units include a first time unit and a third time unit, the first time unit and the third time unit are adjacent time units for receiving first reference signals, the first time unit is before the third time unit, and a configuration of the first reference signal received in the first time unit is different from a configuration of the first reference signal received in the third time unit. The method further includes: receiving second indication information from the network device, where the second indication information indicates the configuration of the first reference signal in the third time unit.

In the foregoing technical solution, the terminal device does not need to receive configuration information of each reference signal used for RLM evaluation, and the terminal device only needs to receive configuration information of a reference signal that is different from configuration information of a previous first reference signal, to reduce signaling overheads.

In some implementations of the third aspect, the configuration of the first reference signal includes at least one of the following parameters: a power, a spatial filter, a port, or a quasi co-location QCL status.

In some implementations of the third aspect, the method further includes: evaluating radio link monitoring RLM based on the radio link quality, where when the RLM is in-synchronization evaluation, N is greater than or equal to 5; or when the RLM is out-of-synchronization evaluation, N is greater than or equal to 10.

In some implementations of the third aspect, the second indication information is carried in a physical downlink control channel PDCCH, or the first information is carried in a medium access control control element MAC CE.

According to a fourth aspect, a communication system is provided. The communication system includes a network device and a terminal device.

The network device sends first indication information, where the first indication information indicates a configuration of a first reference signal in a third time unit. The terminal device receives the first indication information. The network device sends the first reference signal in the third time unit. The terminal device receives the first reference signal in the third time unit. The terminal device determines a first deviation value based on the first indication information, where the first deviation value is a difference between a first transmit power and a transmit power of the first reference signal in the third time unit, and the first transmit power is a preconfigured transmit power of the first reference signal, or the first transmit power is an assumed transmit power of the first reference signal. The terminal device evaluates radio link quality based on the first reference signal in the third time unit and the first deviation value.

In some implementations of the fourth aspect, that the terminal device evaluates the radio link quality based on the first reference signal in the third time unit and the first deviation value includes: The terminal device adjusts a receive power of the first reference signal in the third time unit based on the first deviation value, and the terminal device evaluates the radio link quality based on an adjusted receive power of the first reference signal in the third time unit and a predefined evaluation parameter, where the predefined evaluation parameter includes a ratio of assumed resource element RE energy of a physical downlink control channel PDCCH to RE energy of a channel state information-reference signal CSI-RS, or the predefined evaluation parameter includes a ratio of assumed RE energy of a demodulation reference signal DMRS of the PDCCH to the RE energy of the CSI-RS. Alternatively, the terminal device adjusts a predefined evaluation parameter based on the first deviation value, and the terminal device evaluates the radio link quality based on a receive power of the first reference signal in the third time unit and an adjusted predefined evaluation parameter.

In some implementations of the fourth aspect, that the first indication information indicates the configuration of the first reference signal in the third time unit includes: The first indication information includes a first configuration, and the first configuration is the configuration of the first reference signal in the third time unit. That the terminal device determines the first deviation value based on the first indication information includes: The terminal device determines a configuration deviation, where the configuration deviation is a deviation between the first configuration and a configuration of a first reference signal in a first time unit, the first reference signal in the first time unit is a first reference signal that is last received before the third time unit and that is different from the first configuration, the configuration deviation corresponds to a second deviation value, and the second deviation value is a difference between a transmit power of the first reference signal received in the first time unit and the transmit power of the first reference signal received in the third time. The terminal device determines the first deviation value based on the second deviation value and a third deviation value, where the third deviation value is a difference between the transmit power of the first reference signal received in the first time unit and the first transmit power. Alternatively, the terminal device determines the first deviation value based on a deviation value corresponding to the first configuration.

In some implementations of the fourth aspect, that the first indication information indicates the configuration of the first reference signal in the third time unit includes: The first indication information includes the first deviation value.

In an implementation of the fourth aspect, the terminal device is further configured to receive the first reference signal in the first time unit, where the first time unit and the third time unit are adjacent time units for receiving first reference signals, the first time unit is before the third time unit, and the power of the first reference signal received in the first time unit is different from the configuration of the first reference signal received in the third time unit.

In some implementations of the fourth aspect, that the terminal device receives the first indication information includes: The terminal device receives the first indication information in a second time unit, where the second time unit is between the first time unit and the third time unit.

In some implementations of the fourth aspect, the first indication information is carried in a PDCCH, or the first indication information is carried in a medium access control MAC control element CE.

According to a fifth aspect, a communication system is provided. The communication system includes a network device and a terminal device.

The network device sends M first reference signals in M time units, where the M first reference signals are in one-to-one correspondence with the M time units, the first reference signals are used for radio link monitoring RLM, and M is an integer greater than 1.

The terminal device receives the M first reference signals in the M time units.

The terminal device evaluates downlink radio link quality based on N first reference signals in the M first reference signals, where N is less than M, configurations of at least two first reference signals in the M first reference signals are different, and configurations of the N first reference signals are the same.

In some implementations of the fifth aspect, the configurations of the N first reference signals each are a first configuration, and the first configuration is a configuration of a first reference signal received in a last time unit in the M time units.

In some implementations of the fifth aspect, the configurations of the N first reference signals each are a first configuration, and the first configuration is a configuration of a reference signal with a lowest or highest power in the M first reference signals.

In some implementations of the fifth aspect, the M time units include a first time unit and a third time unit, the first time unit and the third time unit are adjacent time units for receiving first reference signals, the first time unit is before the third time unit, and a configuration of the first reference signal received in the first time unit is different from a configuration of the first reference signal received in the third time unit. The terminal device is further configured to receive second indication information from the network device, where the second indication information indicates the configuration of the first reference signal in the third time unit.

In some implementations of the fifth aspect, the configuration of the first reference signal includes at least one of the following parameters: a power, a spatial filter, a port, or a quasi co-location QCL status.

In some implementations of the fifth aspect, the terminal device is further configured to evaluate radio link monitoring RLM based on the radio link quality, where when the RLM is in-synchronization evaluation, N is greater than or equal to 5; or when the RLM is out-of-synchronization evaluation, N is greater than or equal to 10.

In some implementations of the fifth aspect, the second indication information is carried in a physical downlink control channel PDCCH, or the first information is carried in a medium access control MAC control element CE.

According to a sixth aspect, a communication apparatus is provided. The apparatus is configured to perform the method according to any one of the first aspect to the third aspect. Specifically, the apparatus may include a module configured to perform any one of the first aspect, the second aspect, the third aspect, or the possible implementations of the first aspect, the second aspect, or the third aspect.

According to a seventh aspect, a communication apparatus is provided, and includes at least one processor. The processor is coupled to a memory, and may be configured to execute instructions in the memory, to implement the method according to any one of the first aspect, the second aspect, the third aspect, or the possible implementations of the first aspect, the second aspect, or the third aspect. Optionally, the apparatus further includes the memory. Optionally, the apparatus further includes a communication interface, and the processor is coupled to the communication interface.

In an implementation, the apparatus is a terminal device. When the apparatus is the terminal device, the communication interface may be a transceiver or an input/output interface.

In another implementation, the apparatus is a chip configured in a terminal device. When the apparatus is the chip configured in the terminal device, the communication interface may be an input/output interface.

In another implementation, the apparatus is a chip or a chip system.

Optionally, the transceiver may be a transceiver circuit. Optionally, the input/output interface may be an input/output circuit.

According to an eighth aspect, a computer-readable storage medium is provided. The computer-readable storage medium stores computer instructions. When the computer instructions are executed by an apparatus, the apparatus is enabled to implement the method according to any one of the first aspect, the second aspect, the third aspect, or the possible implementations of the first aspect, the second aspect, or the third aspect.

According to a ninth aspect, a computer program product including instructions is provided. The computer program product includes a computer program. When the computer program is executed by an apparatus, the apparatus is enabled to implement the method according to any one of the first aspect, the second aspect, the third aspect, or the possible implementations of the first aspect, the second aspect, or the third aspect.

According to a tenth aspect, a communication method is provided. The method may be performed by a terminal device and a network device, or may be performed by a chip or a circuit configured in the terminal device or the network device.

The method includes: The network device sends first indication information, where the first indication information indicates a configuration of a first reference signal in a third time unit. The terminal device receives the first indication information. The network device sends the first reference signal in the third time unit. The terminal device receives the first reference signal in the third time unit. The terminal device determines a first deviation value based on the first indication information, where the first deviation value is a difference between a first transmit power and a transmit power of the first reference signal in the third time unit, and the first transmit power is a preconfigured transmit power of the first reference signal, or the first transmit power is an assumed transmit power of the first reference signal. The terminal device evaluates radio link quality based on the first reference signal in the third time unit and the first deviation value.

According to an eleventh aspect, a communication method is provided. The method may be performed by a terminal device and a network device, or may be performed by a chip or a circuit configured in the terminal device or the network device.

The method includes: The network device sends M first reference signals in M time units, where the M first reference signals are in one-to-one correspondence with the M time units, the first reference signals are used for radio link monitoring RLM, and M is an integer greater than 1. The terminal device receives the M first reference signals in the M time units. The terminal device evaluates downlink radio link quality based on N first reference signals in the M first reference signals, where N is less than M, configurations of at least two first reference signals in the M first reference signals are different, and configurations of the N first reference signals are the same.

### BRIEF DESCRIPTION OF DRAWINGS

FIG. 1 is a diagram of a communication system 100 applicable to an embodiment of this application;
FIG. 2 is a diagram of evaluating, by a terminal device, downlink radio link quality in an evaluation time period;
FIG. 3 is a schematic flowchart of a communication method according to an embodiment of this application;
FIG. 4 is a diagram of evaluating, by a terminal device, downlink radio link quality in an evaluation time period based on the method shown in FIG. 3;
FIG. 5 is a schematic flowchart of another communication method according to an embodiment of this application;
FIG. 6 is a schematic flowchart of still another communication method according to an embodiment of this application;
FIG. 7 is a block diagram of a communication apparatus 200 according to an embodiment of this application; and
FIG. 8 is a block diagram of a communication apparatus 300 according to an embodiment of this application.

### DESCRIPTION OF EMBODIMENTS

The following describes the technical solutions of this application with reference to the accompanying drawings.

The technical solutions in embodiments of this application may be applied to various communication systems, for example, a 5th generation (5th generation, 5G) system, a new radio (new radio, NR) system, a long term evolution (long term evolution, LTE) system, an internet of things (internet of things, IoT) system, a wireless fidelity (wireless fidelity, Wi-Fi) system, a wireless communication system related to the 3rd generation partnership project (3rd generation partnership project, 3GPP), or another wireless communication system that may appear in the future, for example, a 6th generation mobile communication system. This is not limited in this application.

The technical solutions provided in this application may be further applied to machine-type communication (machine-type communication, MTC), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-X (vehicle-to-X, V2X, where X may represent anything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

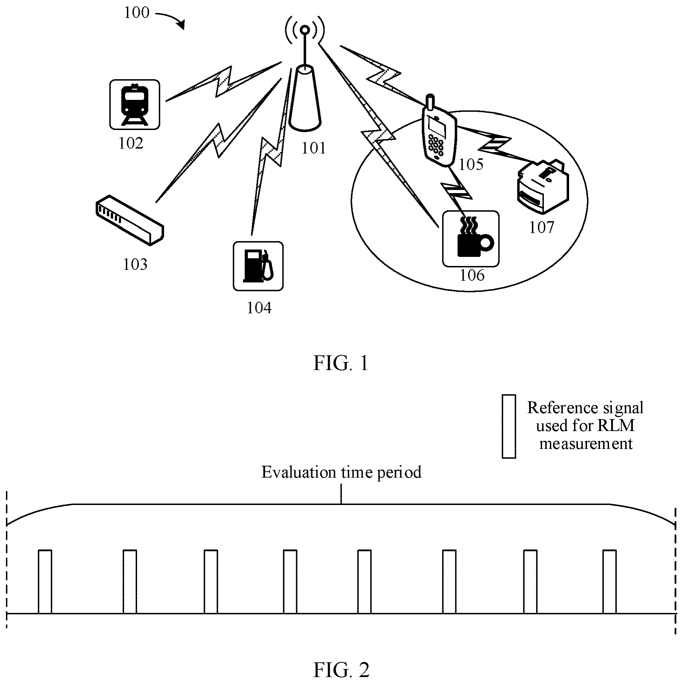

FIG. 1 is a diagram of a communication system 100 applicable to an embodiment of this application. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be movable or fixed. The network device 101 may communicate with one or more of the terminal devices 102 to 107 through a radio link. Each network device may provide communication coverage for a specific geographical area, and may communicate with a terminal device located in the coverage area. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form a communication system.

Optionally, the terminal devices may directly communicate with each other. For example, direct communication between the terminal devices may be implemented by using a D2D technology or the like. As shown in the figure, direct communication may be performed between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

It should be understood that FIG. 1 shows an example of one network device, a plurality of terminal devices, and a communication link between communication devices. Optionally, the communication system 100 may include a plurality of network devices, and coverage of each network device may include another quantity of terminal devices, for example, more or fewer terminal devices. This is not limited in this application.

A plurality of antennas may be configured for the foregoing communication devices, for example, the network device 101 and the terminal devices 102 to 107 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

In embodiments of this application, the network device may be any device with a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; may be a gNB or a transmission point (TRP or TP) in a 5G system, for example, an NR system, or one antenna panel or a group of antenna panels (including a plurality of antenna panels) of a base station in the 5G system; or may be a network node that forms a gNB or a transmission point, for example, a baseband unit (BBU), a distributed unit (distributed unit, DU), or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and the terminal device communicates with the cell by using a transmission resource (for example, a frequency domain resource or a spectrum resource) assigned by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and a low transmit power, and are applicable to providing a high-rate data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, and a terminal device in a future evolved public land mobile network (public land mobile network, PLMN). It should be noted that, the following uses the terminal device as an example for detailed description. In this application, the terminal device mentioned in the following may alternatively be a chip or another apparatus located in the terminal device.

The wearable device may also be referred to as a wearable intelligent device, and is a general term of wearable devices, such as glasses, gloves, watches, clothes, and shoes, developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, for example, various smart bands or smart jewelry for monitoring physical signs.

In addition, the terminal device may alternatively be a terminal device in an internet of things (internet of things, IoT) system. IoT is an important part of future information technology development. A main technical feature of the IoT is connecting a thing to a network by using a communication technology, to implement an intelligent network for interconnection between a person and a machine or between things. The IoT technology can achieve massive connections, deep coverage, and terminal power saving by using, for example, a narrow band (narrow band, NB) technology. In addition, the terminal device may alternatively include sensors such as an intelligent printer, a train detector, and a gas station. Main functions include collecting data (some terminal devices), receiving control information and downlink data of the network device, sending an electromagnetic wave, and transmitting uplink data to the network device.

In the communication system, the network device may configure at least one channel state information-reference signal (channel state information-reference signal, CSI-RS) and/or at least one synchronization signal block (synchronization signal and PBCH block, SSB) for the terminal device by using an RRC parameter RadioLinkMonitoringRS, and the terminal device performs radio link monitoring (radio link monitoring, RLM) measurement by using the configured reference signal. Alternatively, if the network device does not configure an RRC parameter RadioLinkMonitoringRS for the terminal device, the terminal device may receive, by using a physical downlink control channel (physical downlink control channel, PDCCH) of the terminal device, one or more CSI-RSs indicated by a transmission configuration index (transmission configuration index, TCI) status, to perform RLM evaluation.

The RLM evaluation includes in-synchronization RLM evaluation and out-of-synchronization RLM evaluation, and in-synchronization and out-of-synchronization are separately measured. For example, when performing in-synchronization RLM evaluation, if the terminal device determines, through the RLM evaluation, that a radio link of a current serving cell is in an in-synchronization (in-sync) state, the terminal device feeds back a corresponding state to a higher layer of the terminal device. Otherwise, the terminal device does not feed back a corresponding state. Similarly, when performing out-of-synchronization RLM evaluation, if the terminal device determines, through the RLM evaluation, that a radio link of a current serving cell is in an out-of-synchronization (out-of-sync) state, the terminal device feeds back a corresponding state to a higher layer of the terminal device. Otherwise, the terminal device does not feed back a corresponding state. For ease of description, in this application, the corresponding state fed back by the terminal device to the higher layer of the terminal device may also be referred to as an RLM evaluation result. The higher layer of the terminal device detects, based on the fed-back RLM evaluation result, whether a radio link failure (radio link failure, RLF) occurs.

FIG. 2 is a diagram of evaluating, by a terminal device, downlink radio link quality in an evaluation time period. Specifically, the terminal device may evaluate the downlink radio link quality based on a reference signal received in the evaluation time period, a preset evaluation parameter, and a preset threshold (in-synchronization threshold or out-of-synchronization threshold), determine an RLM evaluation result based on a downlink radio link quality evaluation result, and report the evaluation result in a corresponding indicated time period. For related descriptions of the evaluation time period and the corresponding indicated time period, refer to descriptions in the standard TS 38.214 v16.9.0 and/or TS 38.133 v16.9.0.

It should be understood that the reference signal received in the evaluation time period may include one reference signal sent in each periodicity, or may include a plurality of reference signals that are periodically sent. Types of the plurality of reference signals may be the same or may be different. For example, the reference signal received in the evaluation time period may include a periodically sent CSI-RS #1, or may include the CSI-RS #1 and a CSI-RS #2 that are periodically sent, or may include the CSI-RS #1, an SSB #1, and an SSB #2 that are periodically sent.

It should be further understood that reference signals of a same type correspond to a same preset threshold, and reference signals of different types correspond to different preset thresholds. For example, preset thresholds corresponding to the CSI-RS #1 and the CSI-RS #2 are the same, but preset thresholds corresponding to the CSI-RS #1 and the SSB #1 are different.

It should be further understood that downlink radio link quality of the reference signal may be determined in a plurality of manners. For example, the downlink radio link quality of the reference signal may be determined by using a parameter, for example, a reference signal received power (reference signal received power, RSRP), a signal to interference plus noise ratio (signal to interference plus noise ratio, SINR), or a bit error rate of the reference signal. In this case, the downlink radio link quality of the reference signal needs to be compared with the preset threshold under a same condition. For ease of description, in this application, an example in which the downlink radio link quality of the reference signal is the RSRP of the reference signal is used for description.

In a possible implementation, an example in which in-synchronization RLM evaluation is performed for determining is used for description, and the following steps are included.
(1) The terminal device determines, based on the predefined evaluation parameter and the preset in-synchronization threshold, an RSRP threshold corresponding to the preset in-synchronization threshold.

The predefined evaluation parameter includes a ratio (ratio) of assumed resource element (resource element, RE) energy of a physical downlink control channel (physical downlink control channel, PDCCH) to RE energy of a secondary synchronization signal (secondary synchronization signal, SSS)/CSI-RS, or a ratio of assumed RE energy of a demodulation reference signal (demodulation reference signal, DMRS) of the PDCCH to the RE energy of the SSS/CSI-RS. It should be noted that, the ratio is a preset fixed value. For example, a value of the ratio is 4 dB.

It should be understood that, if the reference signal received in the evaluation time period includes the plurality of reference signals that are periodically sent, a corresponding RSRP threshold needs to be determined based on a preset in-synchronization threshold of each reference signal. The following uses an example in which the reference signal received in the evaluation time period includes the CSI-RS #1 and the SSB #1 that are periodically sent for description.

It should be noted that, a change of the ratio inevitably affects the RSRP threshold corresponding to the preset in-synchronization threshold, and further affects evaluation of the downlink radio link quality.

(2) The terminal device determines the RSRP of the received reference signal.

The terminal device periodically receives a reference signal #1 in the evaluation time period. The terminal device may determine an average power based on received powers of the reference signal #1 received for a plurality of times, and obtain a corresponding RSRP of the reference signal #1 based on the average power. For example, if the reference signal received in the evaluation time period includes the CSI-RS #1 and the SSB #1 that are periodically sent, the reference signal #1 herein may be understood as the CSI-RS #1 or the SSB #1.

(3) Determine radio link quality of the corresponding reference signal based on the RSRP threshold corresponding to the preset in-synchronization threshold and the RSRP of the reference signal.

Specifically, when the RSRP of the periodically received reference signal #1 is greater than the RSRP threshold, the terminal device considers that radio link quality of the reference signal #1 is better than the preset in-synchronization threshold. Otherwise, the terminal device considers that radio link quality of the reference signal #1 is worse than the preset in-synchronization threshold.

(4) The terminal device determines an RLM evaluation result based on the radio link quality, and reports the RLM evaluation result in the indicated time period.

Specifically, when downlink radio link quality of at least one of reference signals periodically received in the evaluation time period is higher than the preset in-synchronization threshold, the terminal device reports in-synchronization to a higher layer of the terminal device. For example, the reference signal received in the evaluation time period includes the CSI-RS #1 and the SSB #1 that are periodically sent. When an RSRP of the periodically received CSI-RS #1 is greater than a corresponding RSRP threshold, and/or an RSRP of the periodically received SSB #1 is greater than a corresponding RSRP threshold, the terminal device reports in-synchronization to the higher layer of the terminal device. Otherwise, the terminal device does not perform reporting.

It may be understood that determining of a relative relationship between the downlink radio link quality of the reference signal used for RLM evaluation and an out-of-synchronization threshold is similar to the foregoing descriptions. Specifically, in step (3), when the RSRP of the periodically received reference signal #1 is greater than an out-of- synchronization RSRP threshold, the terminal device considers that the radio link quality of the reference signal #1 is better than the preset out-of-synchronization threshold. Otherwise, the terminal device considers that the radio link quality of the reference signal is worse than the preset out-of-synchronization threshold. In this case, in step (4), when downlink radio link quality of each of the reference signals periodically received in the evaluation time period is lower than the preset out-of-synchronization threshold, the terminal device reports out-of-synchronization to the higher layer of the terminal device. Otherwise, the terminal device does not perform reporting. For example, the reference signal received in the evaluation time period includes the CSI-RS #1 and the SSB #1 that are periodically sent. The terminal device reports out-of-synchronization to the higher layer of the terminal device only when the RSRP of the periodically received CSI-RS #1 is less than a corresponding out-of-synchronization RSRP threshold, and the RSRP of the periodically received SSB #1 is less than a corresponding out-of-synchronization RSRP threshold. Otherwise, the terminal device does not perform reporting.

For a terminal device for which no discontinuous reception (discontinuous reception, DRX) mechanism is configured, the terminal device determines that an indicated time period of the terminal device is a larger value between a minimum periodicity of a reference signal configured for the terminal device and used for RLM evaluation and 10 ms. For a terminal device for which DRX is configured, the terminal device determines that an indicated time period of the terminal device is a largest value among a discontinuous reception cycle, a minimum periodicity of a reference signal configured for the terminal device and used for RLM evaluation, and 10 ms. For the terminal device for which no DRX is configured, the terminal device may determine a length of an evaluation time period based on a preset value and the minimum periodicity of the reference signal used for RLM evaluation, and a length of an evaluation time period used for evaluating out-of-synchronization of the terminal device is not less than 200 ms. For the terminal device for which DRX is configured, the terminal device may determine a length of an evaluation time period based on a preset value, a minimum periodicity of a measurement signal used for RLM, and the DRX cycle.

With gradual evolution of communication systems, "low-carbon" communication, especially how to reduce energy consumption of a network device, has attracted increasing attention. In a possible implementation, the network device may reduce, through dynamic antenna shutdown, a quantity of antenna links used for sending and receiving, to achieve energy saving. After the dynamic antenna shutdown of the network device, a reference signal used for RLM evaluation changes. The change includes but is not limited to a change in a spatial filter corresponding to the reference signal, a change in a quantity of ports, and the like. These changes cause a change in a transmit power corresponding to the reference signal. Currently, the reference signal used for RLM evaluation is semi-statically configured (that is, configured by using RRC signaling). Therefore, the terminal device cannot learn of these changes. After the dynamic antenna shutdown, if the terminal device still performs RLM evaluation in an original evaluation manner, an RLM evaluation result may be inaccurate.

In view of this, this application provides a communication method, to effectively resolve the foregoing technical problem. The following describes in detail the method provided in this application.

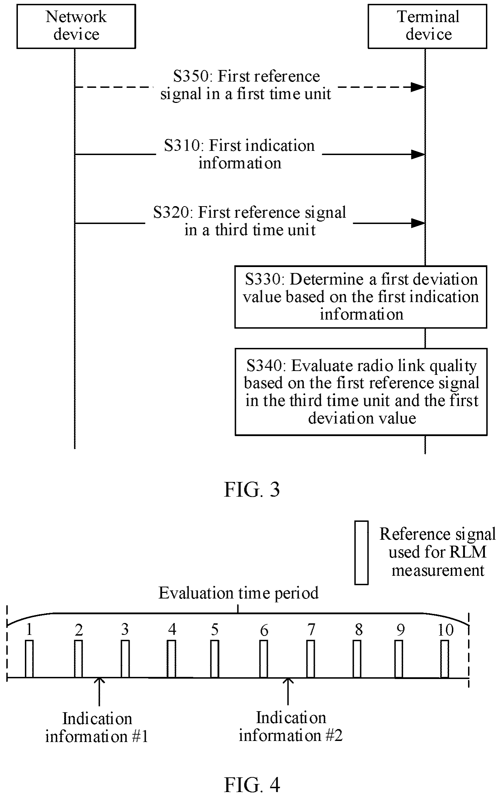

FIG. 3 is a schematic flowchart of a communication method according to an embodiment of this application. The method includes the following steps.

S310: A network device sends first indication information to a terminal device, where the first indication information indicates a configuration of a first reference signal in a third time unit. Correspondingly, the terminal device receives the first indication information from the network device.

It should be understood that the first reference signal is a reference signal used for RLM evaluation. The first reference signal is a periodically sent signal.

For example, the first reference signal may be a CSI-RS, or the first reference signal may be an SSB, or the first reference signal may be a primary synchronization signal (primary synchronization signal, PSS), or the first reference signal may be a secondary synchronization signal (secondary synchronization signal, SSS), where the PSS and the SSS are included in the SSB.

Optionally, the first indication information is carried in a PDCCH, or the first indication information is carried in a medium access control (medium access control, MAC) control element (control element, CE).

Optionally, the configuration of the first reference signal includes at least one of the following parameters: a power, a spatial filter, a port, or a quasi co-location (quasi co-location, QCL) status.

It may be understood that before the network device performs an energy saving operation (for example, dynamic antenna shutdown), the first reference signal is semi-statically configured. In other words, configurations of all first reference signals received by the terminal device are the same, to be specific, transmit powers of sending all the first reference signals by the network device are the same. In this application, the first indication information re-indicates the configuration of the first reference signal in the third time unit, indicating that the configuration (for example, a transmit power) of the first reference signal in the third time unit changes.

Optionally, before S310, the method further includes S350.

S350: The network device sends a first reference signal to the terminal device in a first time unit. Correspondingly, the terminal device receives the first reference signal from the network device in the first time unit.

The first time unit and the third time unit are adjacent time units for receiving first reference signals, and a configuration of the first reference signal in the first time is different from the configuration of the first reference signal in the third time unit. It can be learned that the network device does not need to indicate configuration information of each reference signal used for RLM evaluation, and only needs to indicate configuration information of a reference signal that is different from configuration information of a previous first reference signal, to reduce signaling overheads.

It may be understood that, the configuration of the first reference signal in the first time unit is different from the configuration of the first reference signal in the third time unit. This implicitly indicates that a transmit power of the first reference signal in the first time unit is different from the transmit power of the first reference signal in the third time unit.

For example, that the configuration of the first reference signal in the first time unit is different from the configuration of the first reference signal in the third time unit includes: The first reference signal in the first time unit and the first reference signal in the third time unit are different in terms of one or more of the transmit power, a spatial filter, a port, or a QCL status.

For example, in S310, the network device may send the first indication information to the terminal device in a second time unit, where the second time unit is between the first time unit and the third time unit. Correspondingly, the terminal device receives a first reference signal from the network device in the second time unit.

S320: The network device sends the first reference signal to the terminal device in the third time unit. Correspondingly, the terminal device receives the first reference signal from the network device in the third time unit.

S330: The terminal device determines a first deviation value based on the first indication information. The first deviation value is a difference between a first transmit power and the transmit power of the first reference signal in the third time unit, and the first transmit power is a preconfigured transmit power difference of the first reference signal, or the first transmit power is an assumed transmit power of the first reference signal.

It should be understood that the first transmit power may be an assumed fixed transmit power corresponding to the periodically sent first reference signal. When the first transmit power is the transmit power of the preconfigured (or semi-statically configured) first reference signal, it is considered that the terminal device may learn of the first transmit power. When the first transmit power is the assumed transmit power of the first reference signal, it may be considered that the terminal device does not learn of the first transmit power.

Optionally, that the first indication information indicates the configuration of the first reference signal in the third time unit includes: The first indication information includes a first configuration, and the first configuration is the configuration of the first reference signal in the third time unit. In this optional manner, the terminal device may determine the first deviation value based on the first indication information by using the following two implementation methods.

Method 1: The terminal device determines a configuration deviation, where the configuration deviation is a configuration deviation between the first configuration and the configuration of the first reference signal in the first time unit, the configuration deviation corresponds to a second deviation value, and the second deviation value is a difference between the transmit power of the first reference signal in the first time unit and the transmit power of the first reference signal in the third time. Then, the terminal device determines the first deviation value based on the second deviation value and a third deviation value, where the third deviation value is a difference between the transmit power of the first reference signal in the first time unit and the first transmit power.

Optionally, if a configuration of a first reference signal that is received adjacently before the third time unit is the same as the first configuration, the terminal device may determine the second deviation value based on the first configuration and a configuration of a first reference signal in a time unit #1. The first reference signal in the time unit #1 herein is a first reference signal that is last received by the terminal device before the third time unit and that is different from the first configuration. Alternatively, because a configuration of a first reference signal (for example, a reference signal #1) that is received adjacently before the third time unit is the same, the terminal device may use a first deviation value corresponding to the previously determined reference signal #1 as the first deviation value corresponding to the first reference signal in the third time unit. This is not limited in this application.

Method 2: The first configuration corresponds to one deviation value (namely, the first deviation value), and the terminal device determines the first deviation value based on the first configuration.

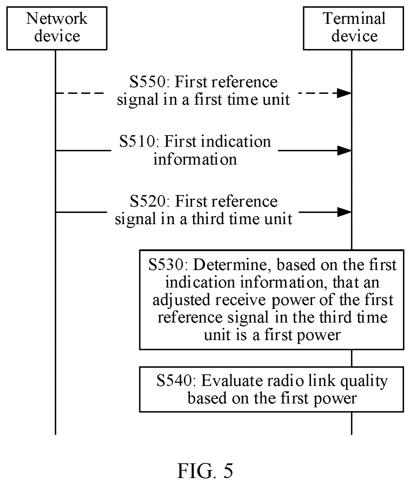

For specific descriptions and examples of the method 1 and the method 2, refer to descriptions of the method 1 and the method 2 in S550 in FIG. 5. Details are not described herein.

Optionally, that the first indication information indicates the configuration of the first reference signal in the third time unit includes: The first indication information includes the first deviation value. In this case, in this optional manner, the terminal device may directly obtain the first deviation value carried in the first indication information.

S340: The terminal device evaluates downlink radio link quality based on the first reference signal in the third time unit and the first deviation value.

It should be understood that evaluating the downlink radio link quality herein refers to evaluating quality of a radio link between the terminal device and the network device.

In the foregoing technical solution, the first indication information indicates the configuration of the first reference signal for performing RLM evaluation, so that the terminal device can determine the first deviation value based on the configuration, and correct an evaluation parameter of the downlink radio link quality based on the first deviation value. In this way, an accurate downlink radio link quality evaluation result is obtained.

With reference to an existing downlink radio link quality evaluation manner, the following provides two possible new evaluation methods for evaluating the downlink radio link quality based on the first deviation value. Herein, an example in which a preset threshold is a preset in-synchronization threshold is used for description.

Evaluation method 1: A main difference between the evaluation method and the existing evaluation method provided above is step 2. The evaluation method includes the following steps.
(1) The terminal device may determine, based on a predefined evaluation parameter and the preset in-synchronization threshold, an RSRP threshold corresponding to the preset in-synchronization threshold.
(2) The terminal device determines the first deviation value based on the first indication information, adjusts a receive power of the first reference signal in the third time unit based on the first deviation value, and determines an RSRP of the first reference signal based on the receive power of the first reference signal.

It should be understood that, during current evaluation, an RSRP of each first reference signal used in step 2 is determined based on a receive power of each first reference signal. Because transmit powers of all first reference signal are the same, received powers of all first reference signals received by the terminal device are almost the same.

In the new evaluation manner, because a value of the predefined evaluation parameter used in step 1 does not change, the terminal device needs to adjust (to be specific, correspondingly increase or decrease) the receive power of the first reference signal in the third time unit based on the first deviation value. In this implementation, power smoothing is performed on the first reference signal in the third time unit, to avoid a case in which burst high-power or low-power sending affects the evaluation result. In this way, an accurate evaluation result can be obtained.

(3) Determine radio link quality of the first reference signal based on the RSRP threshold corresponding to the preset in-synchronization threshold and the RSRP of the first reference signal.

(4) The terminal device determines an RLM evaluation result based on a radio link quality evaluation result, and reports the RLM evaluation result in an indicated time period.

For descriptions in (1), (3), and (4), refer to the foregoing descriptions in the existing evaluation manner. Details are not described herein again.

Evaluation method 2: Main differences between the evaluation method and the existing evaluation method provided above are step 1, step 2, and step 3. The evaluation method includes the following steps.
(1) The terminal device determines the first deviation value based on the first indication information, and adjusts a predefined evaluation parameter based on the first deviation value, for example, increases or decreases the predefined evaluation parameter.

For the predefined evaluation parameter, refer to the descriptions of the predefined evaluation parameter in the existing evaluation method in FIG. 2. Details are not described herein again.

It should be understood that, during current evaluation, a value of the predefined evaluation parameter is a fixed value. In this case, after a reference signal used for RLM evaluation changes, the terminal device still performs radio link quality evaluation on the received first reference signal based on the original value of the predefined evaluation parameter, which may cause an inaccurate RLM evaluation result. Therefore, the terminal device needs to adjust the value of the predefined evaluation parameter based on the first deviation value, to obtain an accurate evaluation result.

(2) Determine, based on the preset in-synchronization threshold and a modified predefined evaluation parameter, an RSRP threshold corresponding to the preset in-synchronization threshold.

(3) Determine radio link quality of the corresponding first reference signal based on the RSRP threshold corresponding to the preset in-synchronization threshold and an RSRP of the first reference signal corresponding to the threshold.

It should be understood that in the evaluation method, the terminal device may receive a plurality of pieces of first indication information, and the terminal device may respectively determine a plurality of first deviation values based on the plurality of pieces of first indication information. Therefore, the plurality of first deviation values correspond to a plurality of adjusted predefined evaluation parameters, so as to correspond to RSRP thresholds corresponding to a plurality of in-synchronization thresholds. The terminal device finally determines the radio link quality based on a plurality of comparison results corresponding to an RSRP threshold corresponding to each in-synchronization threshold and an RSRP of a reference signal corresponding to an average power of first reference signals received for a plurality of times in a corresponding time period.

The time period corresponding to the RSRP threshold corresponding to each in-synchronization threshold may be understood as a corresponding time period between a time unit #1 (that is, an example of the third time unit) indicated by first indication information (referred to as indication information #1 herein) of the RSRP threshold corresponding to the in-synchronization threshold and a time unit #2 (that is, another example of the third time unit) indicated by a 1^{st} piece of first indication information (referred to as indication information #2) received by the terminal device after the first indication information. It should be noted that, the time period includes the time unit #1 but does not include the time unit #2. The following describes the evaluation method by using an example with reference to FIG. 4. Details are not described herein.

(4) The terminal device determines an RLM evaluation result based on the radio link quality, and reports the RLM evaluation result in an indicated time period.

For descriptions of step (4), refer to the foregoing descriptions in the existing evaluation manner. Details are not described herein again.

It can be learned that a main difference between the evaluation method 1 and the evaluation method 2 is that, in the first evaluation manner, the predefined evaluation parameter is not modified, but evaluation needs to be performed after the receive power of the first reference signal is modified based on the first deviation value. In the second evaluation manner, the predefined evaluation parameter is modified based on the first deviation value, but the receive power of the first reference signal is not modified.

The foregoing describes in detail a method for performing accurate RLM evaluation after the dynamic antenna shutdown of the network device.

The following briefly describes the method provided in this application with reference to a scenario shown in FIG. 4. For example, the method includes the following steps.
(1) The network device sends Q reference signals used for RLM evaluation to the terminal device in Q time units in an evaluation time period. The Q reference signals are in one-to-one correspondence with the Q time units, and Q is an integer greater than 1. Correspondingly, the terminal device receives the Q reference signals from the network device in the Q time units in the evaluation time period. For example, in the scenario shown in FIG. 4, Q=10.

For example, the Q reference signals may include one reference signal sent in each periodicity. For example, the Q reference signals include Q CSI-RSs #1, or the Q reference signals include Q CSI-RSs #2, or the Q reference signals include Q SSBs #1.

For example, the Q reference signals may include a plurality of reference signals that are periodically sent, and signal types of the plurality of reference signals may be the same. For example, the Q reference signals include Q1 CSI-RSs #1 and Q2 CSI-RSs #2, where a sum of Q1 and Q2 is equal to Q, and both Q1 and Q2 are positive integers.

For example, the Q reference signals may include a plurality of reference signals that are periodically sent, and signal types of the plurality of reference signals may be different. For example, the Q reference signals include Q3 CSI-RSs #1, Q4 CSI-RSs #2, and Q5 SSBs #1, where a sum of Q3, Q4, and Q5 is equal to Q, and Q3, Q4, and Q5 are all positive integers.

It should be understood that the CSI-RS #1, the CSI-RS #2, the SSB #1, and an SSB #2 in the foregoing examples may all be considered as the first reference signal in the embodiment shown in FIG. 3.

For ease of description, the following continues to provide descriptions by using an example in which Q=10 reference signals include Q=10 CSI-RSs #1 (that is, an example of the first reference signal).

(2) When configuration information of two adjacent CSI-RSs #1 is different, the network device sends the configuration information of the latter CSI-RS #1 between time units in which the two adjacent CSI-RSs #1 are sent. For example, the network device shuts down some transmit antennas after sending a 2^{nd} CSI-RS #1, and then shuts down some transmit antennas after sending a 6^{th} CSI-RS #1. In this step, the network device sends indication information #1 and indication information #2. Correspondingly, the terminal device receives the indication information #1 and the indication information #2.

The indication information #1 (that is, an example of the first indication information) indicates configuration information of a 3^{rd} CSI-RS #1 (that is, an example of the first reference signal in the third time unit). In addition, it indicates that a configuration of the 2^{nd} CSI-RS #1 (that is, an example of the first reference information in the first time unit) is different from a configuration of the 3^{rd} CSI-RS #1 (that is, an example of the first reference signal in the third time unit). The indication information #2 (that is, another example of the first indication information) indicates configuration information of a 7^{th} CSI-RS #1 (that is, an example of the first reference signal in the third time unit). In addition, it indicates that a configuration of the 6^{th} CSI-RS #1 (that is, another example of the first reference information in the first time unit) is different from a configuration of the 7^{th} CSI-RS #1 (that is, another example of the first reference signal in the third time unit). Correspondingly, the terminal device receives the indication information #1 and the indication information #2.

It should be understood that reference signal configurations of a 1^{st} CSI-RS #1 and the 2^{nd} CSI-RS #1 are the same, configurations of the 3^{rd} CSI-RS #1 to the 6^{th} CSI-RS #1 are the same, and configurations of the 7^{th} CSI-RS #1 to a 10^{th} CSI-RS #1 are the same.

For example, in the scenario shown in FIG. 4, the network device sends the indication information #1 after sending the 2^{nd} CSI-RS #1 and before sending the 3^{rd} CSI-RS #1, and the network device sends the indication information #2 after sending the 6^{th} CSI-RS #1 and before sending the 7^{th} CSI-RS #1. Correspondingly, the terminal device receives the indication information #1 after receiving the 2^{nd} CSI-RS #1 and before receiving the 3^{rd} CSI-RS #1, and the terminal device receives the indication information #2 after receiving the 6^{th} CSI-RS #1 and before receiving the 7^{th} CSI-RS #1.

(3) The terminal device evaluates radio link quality based on the 10 CSI-RSs #1 received in the evaluation time period, the indication information #1, and the indication information #2.

For example, the evaluation method 1 is used for description. Specifically, the terminal device determines a deviation value #1 based on the indication information #1, and adjusts received powers of the 3^{rd} CSI-RS #1 to the 6^{th} CSI-RS #1 based on the deviation value #1. Similarly, the terminal device determines a deviation value #2 based on the indication information #2, and adjusts received powers of the 7^{th} CSI-RS #1 to the 10^{th} CSI-RS #1 based on the deviation value #2. In addition, because no indication information indicating to adjust received powers of thₑ 1^{st} CSI-RS #1 and the 2^{nd} CSI-RS #1 is received, the receive powers of the 1^{st} CSI-RS #1 and the 2^{nd} CSI-RS #1 do not need to be adjusted. Then, the terminal device evaluates the radio link quality based on adjusted receive powers of the 10 CSI-RSs #1. For a specific evaluation process, refer to the descriptions in the evaluation method 1. Details are not described herein again.

For example, the evaluation method 2 is used for description. Specifically, the terminal device determines a deviation value #1 based on the indication information #1, and adjusts a value of a preset evaluation parameter based on the deviation value #1 (where an adjusted value is referred to as a value #1 below). Similarly, the terminal device determines a deviation value #2 based on the indication information #2, and adjusts the value of the preset evaluation parameter based on the deviation value #2 (where an adjusted value is referred to as a value #2 below). Then, the terminal device determines, based on the preset evaluation parameter, radio link quality of reference signals respectively corresponding to the 1^{st} CSI-RS #1 and the 2^{nd} CSI-RS #1, determines, based on the value #1, radio link quality of a reference signal corresponding to each of the 3^{rd} CSI-RS #1 to the 6^{th} CSI-RS #1, and determines, based on the value #2, radio link quality of a reference signal corresponding to each of the 7^{th} CSI-RS #1 to the 10^{th} CSI-RS #1. For a subsequent specific evaluation process, refer to the descriptions in the evaluation method 2. Details are not described herein again.

The foregoing describes in detail, with reference to the specific scenario, the method for performing accurate RLM evaluation after the dynamic antenna shutdown of the network device. The following describes another communication method provided in this application. The method may also resolve a problem that an RLM evaluation result may be inaccurate after dynamic antenna shutdown. The following specifically describes the method provided in this application with reference to FIG. 5.

FIG. 5 is a schematic flowchart of another communication method according to an embodiment of this application. The method includes the following steps.

S510: A network device sends first indication information to a terminal device, where the first indication information is used to adjust a receive power of a first reference signal in a third time unit. Correspondingly, the terminal device receives the first indication information from the network device.

It should be understood that the method may be considered as a specific implementation provided based on the evaluation method 2 shown in FIG. 3. In the method, a receive power of a first reference signal received in a corresponding time unit is adjusted by using the first indication information, and then radio link quality is evaluated based on an adjusted receive power, to obtain an accurate evaluation result.

For descriptions of the first reference signal, refer to the descriptions in S310. Details are not described herein again.

Optionally, the first indication information is carried in a PDCCH, or the first indication information is carried in a MAC CE.

Optionally, before S510, the method further includes S550.

S550: The network device sends a first reference signal to the terminal device in a first time unit. Correspondingly, the terminal device receives the first reference signal from the network device in the first time unit.

The first time unit and the third time unit are adjacent time units for receiving first reference signals, and a configuration of the first reference signal in the first time is different from a configuration of the first reference signal in the third time unit.

It may be understood that, the configuration of the first reference signal in the first time unit is different from the configuration of the first reference signal in the third time unit. This indicates that a transmit power of the first reference signal in the first time unit is different from a transmit power of the first reference signal in the third time unit. For other descriptions of S550, refer to the descriptions in S350. Details are not described herein again.

For example, in S510, the network device may send the first indication information to the terminal device in a second time unit, where the second time unit is between the first time unit and the third time unit. Correspondingly, the terminal device receives a first reference signal from the network device in the second time unit.

Optionally, that the first indication information is used to adjust the receive power of the first reference signal in the third time unit is specifically: The first indication information is used to adjust the receive power of the first reference signal in the third time unit to a first power, where the first power is a sum of the receive power of the first reference signal in the third time unit and a first deviation value. The first deviation value is a deviation value between a first transmit power and the transmit power of the first reference signal in the third time unit, and the first transmit power is a preconfigured transmit power difference of the first reference signal, or the first transmit power is an assumed transmit power of the first reference signal. The following describes information specifically indicated by the first indication information by using an example.

It may be understood that the receive power of the first reference signal in the third time unit is adjusted by using the first indication information, to obtain the first power.

Optionally, the first indication information indicates a first scale factor, and the adjusted receive power of the first reference signal in the third time unit is obtained by multiplying the receive power of the first reference signal in the third time unit by the first scale factor.

Optionally, the first indication information indicates a second scale factor, and the adjusted receive power of the first reference signal in the third time unit is obtained by dividing the receive power of the first reference signal in the third time unit by the second scale factor.

In an implementation of the foregoing optional manner, the first indication information includes a first configuration, the first configuration is the configuration of the first reference signal in the third time unit, and the configuration of the first reference signal is used to determine a scale factor (the first scale factor or the second scale factor). In this way, the terminal device may adjust the receive power of the first reference signal in the third time unit based on the scale factor determined by using the first indication information.

For example, the first indication information may indicate a port configuration of the first reference signal in the third time unit, or the first indication information may indicate a time-frequency resource configuration pattern of a port of the first reference signal in the third time unit, where the time-frequency resource configuration pattern may implicitly indicate the port configuration. In this way, the terminal device may determine a scale factor (the first scale factor or the second scale factor) according to a predefined rule. The predefined rule includes: The scale factor is A in a port configuration #1, and the scale factor is B in a port configuration #2. In this case, if the receive power of the first reference signal in the third time unit is X dBm decibel milliwatts, which is equivalent to that the receive power of the first reference signal in the third time unit is Y mW (milliwatts), and the scale factor indicated by the first indication information is A, the adjusted receive power of the first reference signal in the third time unit is (Y*A) mW. A conversion relationship between X dBm and Y mW is X dBm=101gY.

For example, the first indication information may indicate a spatial filter configuration of the first reference signal in the third time unit. In this way, the terminal device may determine a scale factor (the first scale factor or the second scale factor) according to a predefined rule. The predefined rule includes: The scale factor is A in a spatial filter configuration #1, and the scale factor is B in a spatial filter configuration #2.

In another implementation of the foregoing optional manner, the first indication information includes a scale factor (the first scale factor or the second scale factor). In this way, the terminal device may directly adjust the receive power of the first reference signal in the third time unit based on the indicated scale factor.

Optionally, the first indication information indicates the first deviation value.

In an implementation of the foregoing optional manner, that the first indication information indicates the first deviation value includes: The first indication information includes a first configuration, and the first configuration is the configuration of the first reference signal in the third time unit. Based on this implementation, this application provides two possible methods for determining the first deviation value.

Method 1: The terminal device determines a configuration deviation between the first configuration and the configuration of the first reference signal in the first time unit, the configuration deviation corresponds to a second deviation value, and the second deviation value is a difference between the transmit power of the first reference signal in the first time unit and the transmit power of the first reference signal in the third time. Then, the terminal device determines the first deviation value based on the second deviation value and a third deviation value, where the third deviation value is a difference between the transmit power of the first reference signal in the first time unit and the first transmit power.

Optionally, the second deviation value may alternatively be understood as a difference between the receive power of the first reference signal in the first time unit and the receive power of the first reference signal in the third time.

It should be understood that the third deviation value is the difference between the transmit power of the first reference signal in the first time unit and the first transmit power, and the first deviation value is the difference between the first transmit power and the transmit power of the first reference signal in the third time unit. Therefore, a manner of obtaining the third deviation value is the same as a manner of obtaining the first deviation value, and the third deviation value may be obtained by using the method 1 or a method 2.

Optionally, the configuration deviation may be either of a power deviation and a port deviation.

For example, the configuration deviation may indicate a deviation between the receive power of the first reference signal in the third time unit and the receive power of the first reference signal in the first time unit. It may be understood that the power deviation is the second deviation value.

For example, the configuration deviation may indicate a port deviation between a port configuration of the first reference signal in the third time unit and a port configuration of the first reference signal in the first time unit. For example, the port configuration includes a port quantity, and the port deviation may be understood as a port quantity deviation value. The terminal device may determine the second deviation value according to a predefined rule. The predefined rule includes: When the port quantity deviation value is a value #1, the second deviation value is C dB; and when the port quantity deviation is a value #2, the second deviation value is D dB. In this case, if the receive power of the first reference signal in the third time unit is X dBm, the second deviation value is C dB, and the third deviation value is D dB, the adjusted receive power of the first reference signal in the third time unit is (X+C+D) dBm.

Method 2: The first configuration corresponds to one deviation value (namely, the first deviation value), and the terminal device determines the first deviation value based on the first configuration.

For example, the first indication information may indicate a port configuration of the first reference signal in the third time unit, or the first indication information may indicate a time-frequency resource configuration pattern of a port of the first reference signal in the third time unit, where the time-frequency resource configuration pattern may implicitly indicate the port configuration. In this way, the terminal device may determine the first deviation value according to a predefined rule. The predefined rule includes: The first deviation value is C dB in a port configuration #1, and the first deviation value is D dB in a port configuration #2. In this case, if the receive power of the first reference signal in the third time unit is X dBm, and the first deviation value indicated by the first indication information is C dB, the adjusted receive power of the first reference signal in the third time unit is (X+C) dBm.

For example, the first indication information may indicate a spatial filter configuration of the first reference signal in the third time unit. In this way, the terminal device may determine the first deviation value according to a predefined rule. The predefined rule includes: The first deviation value is C dB in a spatial filter configuration #1, and the first deviation value is B dB in a spatial filter configuration #2.

In an implementation of the foregoing optional manner, that the first indication information indicates the first deviation value includes: The first indication information includes the first deviation value. In this case, in this optional manner, the terminal device may directly obtain the first deviation value carried in the first indication information.

For example, if the receive power of the first reference signal in the third time unit is X dBm, and the first deviation value included in the first indication information is C dB, the adjusted receive power of the first reference signal in the third time unit is (X+C) dBm.

S520: The network device sends the first reference signal to the terminal device in the third time unit. Correspondingly, the terminal device receives the first reference signal from the network device in the third time unit.

S530: The terminal device determines, based on the first indication information, that the adjusted receive power of the first reference signal in the third time unit is the first power.

For how to adjust the receive power of the first reference signal in the third time unit to the first power based on the first indication information, refer to the descriptions in S510. Details are not described herein again.

S540: The terminal device evaluates downlink radio link quality based on the first power.

In this way, the terminal device may evaluate the downlink radio link quality based on the method in the evaluation method 1.

In the foregoing technical solution, before and after dynamic antenna shutdown of the network device, to be specific, before and after a quantity of antenna links used to send the reference signal changes, transmit powers of first reference signals sent by the network device are different. In this application, the first indication information indicates to adjust a receive power of a reference signal in a 1^{st} time unit (namely, the third time unit) after the quantity of antenna links changes each time, so that the terminal device can correct, based on the indication information, a receive power of a reference signal participating in evaluation. In this way, an accurate downlink radio link quality evaluation result is obtained.

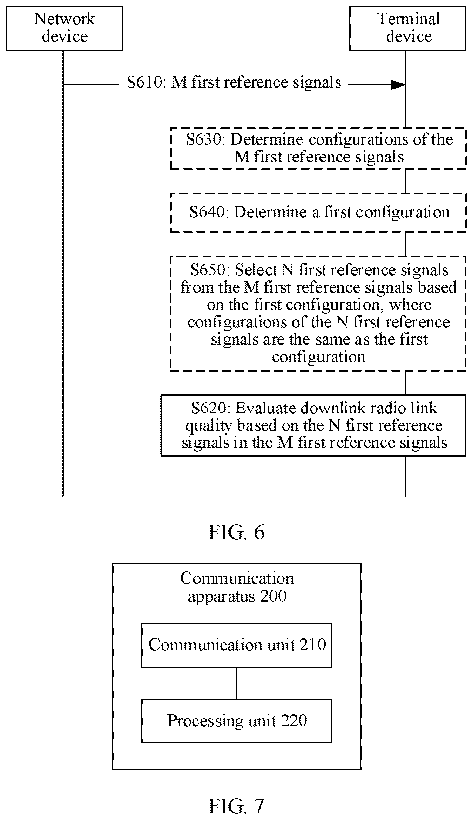

The following describes another communication method provided in this application. The method may also resolve a problem that an RLM evaluation result may be inaccurate after dynamic antenna shutdown. The following specifically describes the method provided in this application with reference to FIG. 6.

FIG. 6 is a schematic flowchart of still another communication method according to an embodiment of this application. The method includes the following steps.

S610: A network device sends M first reference signals to a terminal device in M time units, where the M first reference signals are in one-to-one correspondence with the M time units, and M is an integer greater than 1. Correspondingly, the terminal device receives the M first reference signals from the network device in the M time units.

It should be understood that the M first reference signals are reference signals used for RLM evaluation. The network device periodically sends the M first reference signals.

For example, the first reference signal may be a CSI-RS, or the first reference signal may be an SSB, or the first reference signal may be a PSS, or the first reference signal may be an SSS, where the PSS and the SSS are included in the SSB.

S620: The terminal device evaluates downlink radio link quality based on N first reference signals in the M first reference signals, where N is less than M, configurations of at least two first reference signals in the M first reference signals are different, configurations of the N first reference signals are the same, and N is an integer greater than 1.

It may be understood that configurations of first reference signals in two time units are different. This implicitly indicates that transmit powers of the first reference signals in the two time units are different.

Optionally, the configuration of the first reference signal includes at least one of the following parameters: a power, a spatial filter, a port, or a QCL status.

For example, that the configurations of the first reference signals in the two time units are different includes: The first reference signals in the two time units are different in terms of one or more of the transmit power, the spatial filter, the port, and the QCL status.

It should be noted that, in this method, the terminal device evaluates the radio link quality based on an existing evaluation manner (that is, the evaluation method in the descriptions corresponding to FIG. 2).

In the foregoing technical solution, before and after dynamic antenna shutdown of the network device, to be specific, before and after a quantity of antenna links used to send the reference signal changes, transmit powers of first reference signals sent by the network device are different. The terminal device selects a plurality of first reference signals with a same configuration from the M first reference signals used for RLM evaluation, to be specific, selects a plurality of first reference signals with a same transmit power (corresponding to a same received power) from the first reference signals sent by the network device, to evaluate the radio link quality. In this way, an accurate downlink radio link quality evaluation result can be obtained.

Optionally, before S620, the method further includes S630 to S650.

S630: The terminal device determines configurations of the M first reference signals. The following describes, by using an example, a method for indicating, by the network device, the configurations of the M first reference signals to the terminal device.

For example, the network device may indicate a configuration of each of the M first reference signals to the terminal device.

For example, the M time units include a first time unit and a third time unit, the first time unit and the third time unit are adjacent time units for receiving first reference signals, the first time unit is before the third time unit, and a configuration of the first reference signal received in the first time unit is different from a configuration of the first reference signal received in the third time unit. In other words, when configurations of two adjacent first reference signals are different, the network device may send second indication information to the terminal device, where the second indication information the configuration of the first reference signal in the third time unit.

For example, the second indication information is carried in a PDCCH, or the first information is carried in a MAC CE.

S640: The terminal device determines a first configuration.

It should be understood that the first configuration is used to select a reference signal for evaluating the radio link quality, and a configuration of the selected reference signal needs to be the same as the first configuration.

Optionally, the first configuration may be a configuration of any one of the M first reference signals.

For example, the first configuration is a configuration of a first reference signal received in a last time unit in the M time units.

For example, the first configuration is a configuration of a reference signal with a lowest or highest power in the M first reference signals received in the M time units. It should be noted that, the reference signal with the lowest or highest power herein is a reference signal with a highest or lowest power in the M first reference signals received by the terminal device.

S650: The terminal device selects N first reference signals from the M first reference signals based on the first configuration, where configurations of the N first reference signals are the same as the first configuration.

For example, the RLM evaluation is in-synchronization evaluation, and N needs to be greater than or equal to 5 when the radio link quality is evaluated.

For example, the RLM evaluation is out-of-synchronization evaluation, and N needs to be greater than or equal to 10 when the radio link quality is evaluated.

The following briefly describes the method provided in this application with reference to the scenario shown in FIG. 4. For example, the method includes the following steps.
(1) The network device sends Q reference signals used for RLM evaluation to the terminal device in Q time units in an evaluation time period. The Q reference signals are in one-to-one correspondence with the Q time units, and Q is an integer greater than 1. Correspondingly, the terminal device receives the Q reference signals from the network device in the Q time units in the evaluation time period. For example, in the scenario shown in FIG. 4, Q=10.

For example, the Q reference signals may include one reference signal sent in each periodicity. For example, the Q reference signals include Q CSI-RSs #1, or the Q reference signals include Q CSI-RSs #2, or the Q reference signals include Q SSBs #1.

For example, the Q reference signals may include a plurality of reference signals that are periodically sent, and signal types of the plurality of reference signals may be the same. For example, the Q reference signals include Q1 CSI-RSs #1 and Q2 CSI-RSs #2, where a sum of Q1 and Q2 is equal to Q, and both Q1 and Q2 are positive integers.

For example, the Q reference signals may include a plurality of reference signals that are periodically sent, and signal types of the plurality of reference signals may be different. For example, the Q reference signals include Q3 CSI-RSs #1, Q4 CSI-RSs #2, and Q5 SSBs #1, where a sum of Q3, Q4, and Q5 is equal to Q, and Q3, Q4, and Q5 are all positive integers.

It should be understood that the CSI-RS #1, the CSI-RS #2, the SSB #1, and the SSB #1 in the foregoing examples may all be considered as the first reference signal in the embodiment shown in FIG. 3.

For ease of description, the following continues to provide descriptions by using an example in which Q=10 reference signals include Q=10 CSI-RSs #1 (that is, an example of the M first reference signals, where M=10).

(2) The terminal device determines configurations of the 10 CSI-RSs #1.

For example, the terminal device determines that a configuration of a 1^{st} CSI-RS #1 is a configuration #2, configurations of a 2^{nd} CSI-RS #1 to a 7^{th} CSI-RS #1 and a 9^{th} CSI-RS #1 are all configurations #1, and configurations of an 8^{th} CSI-RS #1 and a 10^{th} CSI-RS #1 are configurations #3.

(3) The terminal device determines the first configuration.

For example, the first configuration herein is a configuration of a signal with a lowest power in the 10 CSI-RSs #1.

(4) The terminal device determines, from the 10 CSI-RSs #1 based on the first configuration, a first reference signal for evaluating the radio link quality.

For example, the reference signal with the lowest power is the 7^{th} CSI-RS #1 in FIG. 4. In this case, in FIG. 4, the configurations of the 2^{nd} CSI-RS #1 to the 6^{th} CSI-RS #1 are the same, and the configurations of the 9^{th} CSI-RS #1 and the 7^{th} CSI-RS #1 are the same, and may all be used for evaluating the radio link quality.

(5) The terminal device evaluates the radio link quality based on the selected first reference signal.

Further, for example, if in-synchronization evaluation needs to be performed, a quantity of CSI-RSs #1 on which radio link quality evaluation needs to be performed needs to be greater than or equal to 5. In this case, at least five CSI-RSs #1 may be selected from the 2^{nd} CSI-RS #1 to the 7^{th} CSI-RS #1 and the 9^{th} CSI-RS #1 to evaluate the radio link quality.

It should be understood that sequence numbers of the foregoing processes do not mean execution sequences. The execution sequences of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined to form a new embodiment based on an internal logical relationship thereof.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (such as the foregoing terminal device or the foregoing network device) may also be implemented by a component (such as a chip or a circuit) of the device.

The foregoing describes the method provided in embodiments of this application in detail with reference to FIG. 1 to FIG. 6. The method is mainly described from a perspective of interaction between the terminal device and the network device. It may be understood that, to implement the foregoing functions, the terminal device and the network device include corresponding hardware structures and/or software modules for performing the functions.

A person skilled in the art should be able to be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

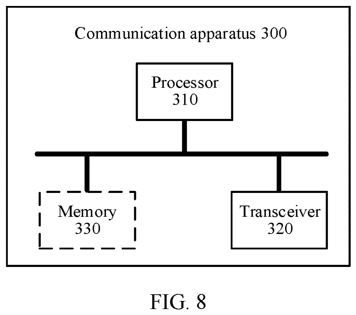

The following describes in detail, with reference to FIG. 7 and FIG. 8, communication apparatuses provided in embodiments of this application. It should be understood that descriptions of apparatus embodiments correspond to the descriptions of the method embodiments. Therefore, for content that is not described in detail, refer to the foregoing method embodiments. For brevity, details of some content are not described herein again. In embodiments of this application, functional modules of a terminal device or a network device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, another division manner may be used. Descriptions are provided below by using an example in which each functional module is obtained through division based on each corresponding function.

The foregoing describes in detail the data transmission method provided in this application. The following describes communication apparatuses provided in this application. In a possible implementation, the apparatus is configured to implement the steps or procedures corresponding to the network device in the foregoing method embodiments. In another possible implementation, the apparatus is configured to implement the steps or procedures corresponding to the terminal device in the foregoing method embodiments.

FIG. 7 is a block diagram of a communication apparatus 200 according to an embodiment of this application. As shown in FIG. 7, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement corresponding steps or procedures performed by the terminal device in the foregoing method embodiments. The processing unit 220 is configured to perform processing-related operations of the terminal device in the foregoing method embodiments. The communication unit 210 is configured to perform sending-related operations of the terminal device in the foregoing method embodiments.

In another possible design, the apparatus 200 may implement corresponding steps or procedures performed by the network device in the foregoing method embodiments. The communication unit 210 is configured to perform receiving-related operations of the network device in the foregoing method embodiments. The processing unit 220 is configured to perform processing-related operations of the network device in the foregoing method embodiments.

It should be understood that the apparatus 200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the terminal device in the foregoing embodiments, and may be configured to perform procedures and/or steps corresponding to the terminal device in the foregoing method embodiments. Alternatively, the apparatus 200 may be specifically the network device in the foregoing embodiments, and may be configured to perform procedures and/or steps corresponding to the network device in the foregoing method embodiments. To avoid repetition, details are not described herein again.

The apparatus 200 in each of the foregoing solutions has functions of implementing the corresponding steps performed by the terminal device in the foregoing methods, or the apparatus 200 in each of the foregoing solutions has functions of implementing the corresponding steps performed by the network device in the foregoing methods. The function may be implemented by hardware, or may be implemented by hardware by executing corresponding software. The hardware or the software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit, for example, the processing unit, may be replaced with a processor, to separately perform the sending/receiving operations and the processing-related operations in the method embodiments.

In addition, the communication unit may alternatively be a transceiver circuit (for example, may include a receiving circuit and a sending circuit), and the processing unit may be a processing circuit. In this embodiment of this application, the apparatus in FIG. 7 may be the AP or the STAin the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 8 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the terminal device in the foregoing method embodiments. In another possible implementation, the apparatus 300 is configured to implement procedures and steps corresponding to the network device in the foregoing method embodiments.

It should be understood that the apparatus 300 may be specifically the terminal device or the network device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the terminal device or the network device in the foregoing method embodiments. Optionally, the memory 330 may include a read-only memory and a random access memory, and provide instructions and data for the processor. A part of the memory may further include a non-volatile random access memory. For example, the memory may further store information of a device type. The processor 310 may be configured to execute the instructions stored in the memory. In addition, when the processor 310 executes the instructions stored in the memory, the processor 310 is configured to perform the steps and/or procedures corresponding to the terminal device or the network device in the foregoing method embodiments.

In an implementation process, steps in the foregoing methods may be completed by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory of the systems and methods described in this specification includes but is not limited to these memories and any memory of another proper type.

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that an operation and/or processing performed by the terminal device or the network device in any method embodiment are/is performed.

Further, the chip may include a communication interface. The communication interface may be an input/output interface, an interface circuit, or the like. Further, the chip may include a memory.

In addition, this application further provides a communication system, including the terminal device and the network device in embodiments of this application.

It should be further noted that, the memory described in this specification is intended to include but is not limited to these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form. Units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any proper manner.

It should be further understood that ordinal numbers such as "first" and "second" mentioned in embodiments of this application are used to distinguish between a plurality of objects, and are not intended to limit sizes, content, an order, a time sequence, priorities, importance, or the like of the plurality of objects. For example, first information and second information do not indicate a difference in an information amount, content, a priority, importance, or the like.

It should be further understood that in this application, "when" and "if" both indicate that corresponding processing is performed by a network element in an objective case, are not intended to limit time, do not require a determining action to be performed during implementation of the network element, and do not imply that there is any other limitation.

It should be further understood that, in this application, "at least one" means one or more, and "a plurality of" means two or more. "At least one item (piece)" or a similar expression thereof means one item (piece) or a plurality of items (pieces), that is, any combination of these items, including any combination of singular items (pieces) or plural items (pieces). For example, at least one item (piece) of a, b, or c may indicate a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. The foregoing uses three elements A, B, and C as an example to describe an optional case of the item. When an expression is "an item includes at least one of the following: A, B, ..., and X", that is, when more elements are included in the expression, a case to which the item is applicable may also be obtained according to the foregoing rule.

It should be further understood that, the term "and/or" in this specification describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first indication information, wherein the first indication information indicates a configuration of a first reference signal in a third time unit;
receiving the first reference signal in the third time unit;
determining a first deviation value based on the first indication information, wherein the first deviation value is a difference between a first transmit power and a transmit power of the first reference signal in the third time unit, and the first transmit power is a preconfigured transmit power of the first reference signal, or the first transmit power is an assumed transmit power of the first reference signal; and
evaluating radio link quality based on the first reference signal in the third time unit and the first deviation value.

2. The method according to claim 1, wherein evaluating the radio link quality based on the first reference signal in the third time unit and the first deviation value comprises:
adjusting a receive power of the first reference signal in the third time unit based on the first deviation value; and
evaluating radio link quality based on an adjusted receive power of the first reference signal in the third time unit and a predefined evaluation parameter, wherein the predefined evaluation parameter comprises a ratio of assumed resource element RE energy of a physical downlink control channel PDCCH to RE energy of a channel state information-reference signal CSI-RS, or the predefined evaluation parameter comprises a ratio of assumed RE energy of a demodulation reference signal DMRS of a PDCCH to the RE energy of a CSI-RS;
or
adjusting the predefined evaluation parameter based on the first deviation value; and
evaluating the radio link quality based on a receive power of the first reference signal in the third time unit and an adjusted predefined evaluation parameter.

3. The method according to claim 1 or 2, wherein the first indication information indicates the configuration of the first reference signal in the third time unit comprises:
the first indication information comprises a first configuration, and the first configuration is a configuration of the first reference signal in the third time unit; and
determining the first deviation value based on the first indication information comprises:
determining a configuration deviation, wherein the configuration deviation is a deviation between the first configuration and a configuration of a first reference signal in a first time unit, the first reference signal in the first time unit is a first reference signal that is last received before the third time unit and that is different from the first configuration, the configuration deviation corresponds to a second deviation value, and the second deviation value is a difference between a transmit power of the first reference signal received in the first time unit and the transmit power of the first reference signal received in the third time; and
determining the first deviation value based on the second deviation value and a third deviation value, wherein the third deviation value is a difference between the transmit power of the first reference signal received in the first time unit and the first transmit power;
or
determining the first deviation value based on a deviation value corresponding to the first configuration.

4. The method according to claim 1 or 2, wherein that the first indication information indicates the configuration of the first reference signal in the third time unit comprises:
the first indication information comprises a first deviation value.

5. The method according to any one of claims 1 to 4, wherein the method further comprises:
receiving the first reference signal in the first time unit, wherein the first time unit and the third time unit are adjacent time units for receiving first reference signals, the first time unit is before the third time unit, and the power of the first reference signal received in the first time unit is different from the configuration of the first reference signal received in the third time unit.

6. The method according to any one of claims 1 to 5, wherein receiving the first indication information comprises:
receiving the first indication information in a second time unit, wherein the second time unit is between the first time unit and the third time unit.

7. The method according to any one of claims 1 to 6, wherein first indication information is carried in a PDCCH, or the first indication information is carried in a medium access control MAC control element CE.

8. A communication method, comprising:
receiving M first reference signals from a network device in M time units, wherein the M first reference signals are in one-to-one correspondence with the M time units, the first reference signals are used for radio link monitoring RLM, and M is an integer greater than 1; and
evaluating downlink radio link quality based on N first reference signals in the M first reference signals, wherein N is less than M, configurations of at least two first reference signals in the M first reference signals are different, and configurations of the N first reference signals are the same.

9. The method according to claim 8, wherein the configurations of the N first reference signals each are a first configuration, and the first configuration is a configuration of a first reference signal received in a last time unit in the M time units.

10. The method according to claim 8, wherein the configurations of the N first reference signals each are a first configuration, and the first configuration is a configuration of a reference signal with a lowest or highest power in the M first reference signals.

11. The method according to any one of claims 8 to 10, wherein the M time units comprise a first time unit and a third time unit, the first time unit and the third time unit are adjacent time units for receiving first reference signals, the first time unit is before the third time unit, and a configuration of the first reference signal received in the first time unit is different from a configuration of the first reference signal received in the third time unit; and the method further comprises:
receiving second indication information from the network device, wherein the second indication information indicates the configuration of the first reference signal in the third time unit.

12. The method according to any one of claims 8 to 11, wherein the configuration of the first reference signal comprises at least one of the following parameters: a power, a spatial filter, a port, or a quasi co-location QCL status.

13. The method according to any one of claims 8 to 12, wherein the method further comprises:
evaluating radio link monitoring RLM based on the radio link quality, wherein
when the RLM is in-synchronization evaluation, N is greater than or equal to 5; or when the RLM is out-of-synchronization evaluation, N is greater than or equal to 10.

14. The method according to any one of claims 8 to 13, wherein the second indication information is carried in a physical downlink control channel PDCCH, or the first information is carried in a medium access control MAC control element CE.

15. A communication system, comprising a network device and a terminal device, wherein
the network device is configured to send first indication information, wherein the first indication information indicates a configuration of a first reference signal in a third time unit;
the terminal device is configured to receive the first indication information;
the network device is configured to send first reference signal in the third time unit;
the terminal device is configured to receive first reference signal in the third time unit;
the terminal device is configured to determine a first deviation value based on the first indication information, wherein the first deviation value is a difference between a first transmit power and a transmit power of the first reference signal in the third time unit, and the first transmit power is a preconfigured transmit power of the first reference signal, or the first transmit power is an assumed transmit power of the first reference signal; and
the terminal device is configured to evaluate radio link quality based on the first reference signal in the third time unit and the first deviation value.

16. The system according to claim 15, wherein evaluating, by the terminal device, the radio link quality based on the first reference signal in the third time unit and the first deviation value comprises:
adjusting, by the terminal device, a receive power of the first reference signal in the third time unit based on the first deviation value; and
evaluating, by the terminal device, the radio link quality based on an adjusted receive power of the first reference signal in the third time unit and a predefined evaluation parameter, wherein the predefined evaluation parameter comprises a ratio of assumed resource element RE energy of a physical downlink control channel PDCCH to RE energy of a channel state information-reference signal CSI-RS, or the predefined evaluation parameter comprises a ratio of assumed RE energy of a demodulation reference signal DMRS of a PDCCH to a RE energy of the CSI-RS;
or
adjusting, by the terminal device, the predefined evaluation parameter based on the first deviation value; and
evaluating, by the terminal device, the radio link quality based on a receive power of the first reference signal in the third time unit and an adjusted predefined evaluation parameter.

17. The system according to claim 15 or 16, wherein the first indication information indicates the configuration of the first reference signal in the third time unit comprises:
the first indication information comprises a first configuration, and the first configuration is a configuration of the first reference signal in the third time unit; and
determining, by the terminal device, the first deviation value based on the first indication information comprises:
determining, by the terminal device, a configuration deviation, wherein the configuration deviation is a deviation between the first configuration and a configuration of a first reference signal in a first time unit, the first reference signal in the first time unit is a first reference signal that is last received before the third time unit and that is different from the first configuration, the configuration deviation corresponds to a second deviation value, and the second deviation value is a difference between a transmit power of the first reference signal received in the first time unit and the transmit power of the first reference signal received in the third time; and
determining, by the terminal device, the first deviation value based on the second deviation value and a third deviation value, wherein the third deviation value is a difference between the transmit power of the first reference signal received in the first time unit and the first transmit power;
or
determining, by the terminal device, the first deviation value based on a deviation value corresponding to the first configuration.

18. The system according to claim 15 or 16, wherein that the first indication information indicates the configuration of the first reference signal in the third time unit comprises:
the first indication information comprises a first deviation value.

19. The system according to any one of claims 15 to 18, wherein
the terminal device is further configured to receive the first reference signal in the first time unit, wherein the first time unit and the third time unit are adjacent time units for receiving first reference signals, the first time unit is before the third time unit, and the power of the first reference signal received in the first time unit is different from the configuration of the first reference signal received in the third time unit.

20. The system according to any one of claims 15 to 19, wherein receiving, by the terminal device, the first indication information comprises:
receiving, by the terminal device, the first indication information in a second time unit, wherein the second time unit is between the first time unit and the third time unit.

21. The system according to any one of claims 15 to 20, wherein the first indication information is carried in a PDCCH, or the first indication information is carried in a medium access control MAC control element CE.

22. A communication system, comprising a network device and a terminal device, wherein
the network device sends M first reference signals in M time units, wherein the M first reference signals are in one-to-one correspondence with the M time units, the first reference signals are used for radio link monitoring RLM, and M is an integer greater than 1;
the terminal device receives the M first reference signals in the M time units; and
the terminal device evaluates downlink radio link quality based on N first reference signals in the M first reference signals, wherein N is less than M, configurations of at least two first reference signals in the M first reference signals are different, and configurations of the N first reference signals are the same.

23. The system according to claim 22, wherein the configurations of the N first reference signals each are a first configuration, and the first configuration is a configuration of a first reference signal received in a last time unit in the M time units.

24. The system according to claim 22, wherein the configurations of the N first reference signals each are a first configuration, and the first configuration is a configuration of a reference signal with a lowest or highest power in the M first reference signals.

25. The system according to any one of claims 22 to 24, wherein the M time units comprise a first time unit and a third time unit, the first time unit and the third time unit are adjacent time units for receiving first reference signals, the first time unit is before the third time unit, and a configuration of the first reference signal received in the first time unit is different from a configuration of the first reference signal received in the third time unit; and
the terminal device is further configured to receive second indication information from the network device, wherein the second indication information indicates the configuration of the first reference signal in the third time unit.

26. The system according to any one of claims 22 to 25, wherein the configuration of the first reference signal comprises at least one of the following parameters: a power, a spatial filter, a port, or a quasi co-location QCL status.

27. The system according to any one of claims 22 to 26, wherein
the terminal device is further configured to evaluate radio link monitoring RLM based on the radio link quality, wherein
when the RLM is in-synchronization evaluation, N is greater than or equal to 5; or when the RLM is out-of-synchronization evaluation, N is greater than or equal to 10.

28. The system according to any one of claims 22 to 27, wherein the second indication information is carried in a physical downlink control channel PDCCH, or the first information is carried in a medium access control MAC control element CE.

29. A communication apparatus, comprising a module or unit configured to perform the method according to any one of claims 1 to 14.

30. A communication apparatus, comprising at least one processor, wherein
the at least one processor is configured to execute a computer program stored in a memory, to enable the apparatus to perform the method according to any one of claims 1 to 7; or
the at least one processor is configured to execute a computer program stored in a memory, to enable the apparatus to perform the method according to any one of claims 8 to 14.

31. A computer-readable storage medium, comprising a computer program, wherein
when the computer program is run on a computer, the computer is enabled to perform the method according to any one of claims 1 to 7; or
when the computer program is run on a computer, the computer is enabled to perform the method according to any one of claims 8 to 14.

32. A computer program product, wherein the computer program product comprises computer program code, wherein
when the computer program code is run on a computer, the computer is enabled to implement the method according to any one of claims 1 to 7; or
when the computer program code is run on a computer, the computer is enabled to implement the method according to any one of claims 8 to 14.
